# EUROPEAN PATENT SPECIFICATION

(11) **EP 3 989 196 B1**
(45) Date of publication and mention of the grant of the patent: **03.05.2023**
(21) Application number: 21202452.5
(22) Date of filing: 13.10.2021
(51) Int. Cl.: G08B 29/04, G08B 13/196

(54) **APPARATUS, SYSTEM, METHOD AND PROGRAM**
VORRICHTUNG, SYSTEM, VERFAHREN UND PROGRAMM
APPAREIL, SYSTÈME, PROCÉDÉ ET PROGRAMME

(30) Priority: 23.10.2020 JP 2020178477
(43) Date of publication of application: 27.04.2022
(73) Proprietor: Yokogawa Electric Corporation, Tokyo 180-8750 (JP)
(72) Inventor: KOJIMA, Osamu, Musashino-shi, Tokyo, 180-8750 (JP); WADA, Atsushi, Musashino-shi, Tokyo, 180-8750 (JP)
(74) Representative: Grünecker Patent- und Rechtsanwälte PartG mbB

(56) References cited:
- EP-A1- 1 672 604
- EP-A1- 1 936 576
- WO-A1-98/28706
- WO-A2-2006/038073
- JP-A- 2008 077 517

## Description

### BACKGROUND

### 1. TECHNICAL FIELD

The present invention relates to an apparatus, a system, a method, and a program.

### 2. RELATED ART

Conventionally, a variety of security systems using a monitoring camera has been proposed (for example, see Patent document 1).

[Patent Document 1] Japanese Patent Application Publication No. 2015-162232

EP 1 936 576 A1 discloses a method and a module for identifying possible tampering of a camera view.

WO 2006/038073 A2 provides a method of analyzing a series of images containing static image portions and possibly dynamic image portions for changes.

A method for detecting tampering of a surveillance camera is known from EP 1 672 604 A1.

JP 2008 077517 A discloses a camera block detection system.

WO 98/28706 teaches a low false alarm rate video security system using object classification.

### GENERAL DISCLOSURE

### SUMMARY

A first aspect of the present invention provides an apparatus according to claim 1. The apparatus includes a receiving unit for receiving an image captured by the monitoring camera. The apparatus includes a determination unit for determining, based on the received image, the presence or absence of the occurrence of an event that interferes with the monitoring performed by the monitoring camera. The apparatus includes a notification unit for notifying an administrator of the monitoring camera that the presence of the occurrence of the event is determined, in response to the determination. The apparatus further includes an image management unit for associating the image captured by another monitoring camera including the monitoring camera within the field of view with the presence of the occurrence of the event, in response to the presence of the occurrence of the event being determined, to confirm the factor that caused the monitoring interference event.

The apparatus may further include a storage unit to store a reference image based on a past image captured by the monitoring camera in the past. The determination unit may determine the presence or absence of the occurrence of an event based on a comparison result of the received image and the reference image.

The determination unit may determine the presence of the occurrence of the event in response to the composition of the received image changing from the composition of the reference image by a threshold or more.

The determination unit may determine the presence or absence of the occurrence of the event based on the focusing state of the monitoring camera.

The determination unit may determine the presence or absence of the occurrence of the event based on the brightness of the image captured by the monitoring camera.

The determination unit may determine the presence or absence of the occurrence of the event based on the image captured by the monitoring camera through irradiation of the infrared light.

The determination unit may determine the presence or absence of the occurrence of the event based on the shaking of the moving image captured by the monitoring camera.

The determination unit may determine the presence of the occurrence of the event in response to the receiving unit receiving no image.

The determination unit may determine whether the event has occurred.

The determination unit may determine whether the event will occur.

The apparatus may further include a learning processing unit that performs the learning processing on the estimation model that estimates the presence or absence of the occurrence of the event from the image captured by the monitoring camera, based on the image captured by the monitoring camera in a case where the occurrence of the event that interferes with the monitoring being present.

The apparatus may further include a warning unit for warning, via a monitoring camera, a person or animal that caused an event to occur, in response to the presence of the occurrence of the event being determined.

A second aspect of the present invention provides a system according to claim 13. The system includes the apparatus according to the first aspect. The system includes one or more monitoring cameras for supplying the captured image to the apparatus.

The system may include a plurality of apparatuses.

A third aspect of the present invention provides a method according to claim 15.

A fourth aspect of the present invention provides a program according to claim 16.

The summary clause does not necessarily describe all necessary features of the embodiments of the present invention. The present invention may also be a sub-combination of the features described above.

### BRIEF DESCRIPTION OF THE DRAWINGS

Fig. 1 shows a security system 1 according to the present embodiment.
Fig. 2 shows an operation of an apparatus 4.
Fig. 3 shows a security system 1A according to a modification.
Fig. 4 shows an example of a computer 2200 in which a plurality of aspects of the present invention may be entirely or partially embodied.

### DESCRIPTION OF EXEMPLARY EMBODIMENTS

Hereinafter, the present invention will be described through embodiments of the invention, but the following embodiments do not limit the claimed invention. In addition, not all combinations of features described in the embodiments are necessary to solutions of the invention.

### [1. security system 1]

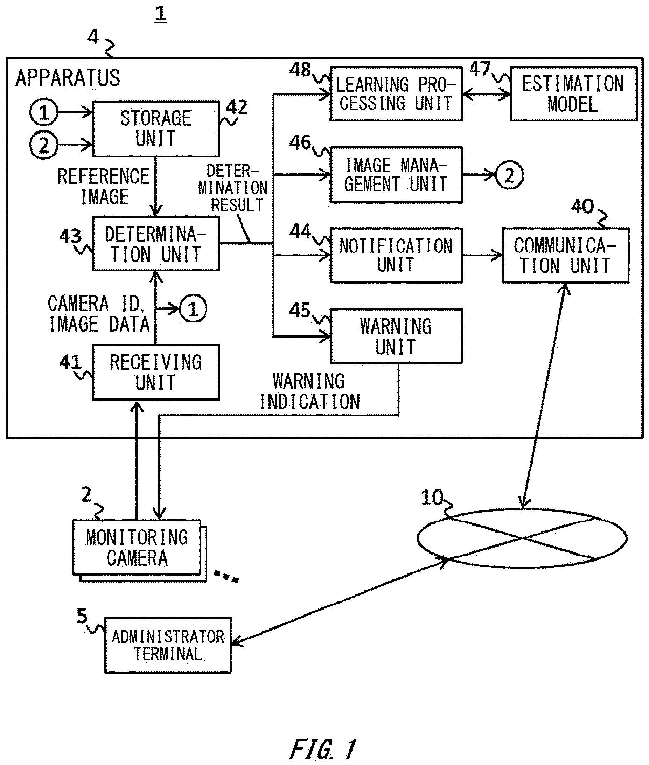

Fig. 1 shows a security system 1 according to the present embodiment. The security system 1 includes a plurality of monitoring cameras 2, an apparatus 4, and an administrator terminal 5.

Herein, in the present embodiment, as one example, among each component of the security system 1, each monitoring camera 2 may be directly connected to the apparatus 4, and the apparatus 4 may be connected to the administrator terminal 5 via the communication network 10. The communication network 10 may be configured to include various networks such as the Internet, the wide area network (WAN), and the local area networks, or the combination thereof. The communication network 10 may include a connection point which uses at least one of wired communication or wireless communication. The communication network 10 may be achieved by a dedicated line separated from a public line such as the Internet.

### [1.1. monitoring camera 2]

Each monitoring camera 2 performs the capturing of a region to be captured. Each monitoring camera 2 may supply to the apparatus 4 the image obtained through the capturing (also referred to as image data). The image may also be a moving image (also referred to as video) and the monitoring camera 2 may continuously perform the capturing to generate the moving image. For example each monitoring camera 2 may perform the capturing at 30 f/s. It is noted that the image may be a static image. In this case, the monitoring camera 2 may perform the capturing at a periodic timing to generate a static image. The monitoring camera 2 may be a camera for a visible light or may be a camera for an infrared light or an ultraviolet light (as one example, X-ray). As one example, the monitoring camera 2 may perform the capturing by utilizing the visible light during the daytime, and may perform the capturing by utilizing the reflection light from an object irradiated with the infrared light at night,.

Each monitoring camera 2 may support audio output. For example, each monitoring camera 2 may include a speaker, which is not shown in the figure, or may be externally connected to a speaker. In this way, each monitoring camera 2 may output the voice message in response to the command from the apparatus 4 or may output a warning sound.

In addition, each monitoring camera 2 may include a light, which is not shown in the figure, or may be externally connected to a light. In this way, each monitoring camera 2 may produce a flash in the field of view.

Each monitoring camera 2 may be arranged on a road, a parking, a street lamp, or a utility pole, or may be arranged at an entrance, a corridor, or the like of a facility. The facility may be a plant, may be a school, a house, a station, an airport, a museum, a hospital, or a store (as one example, a restaurant), or may be a theme park, an amusement park, an attraction facility therein, or the like. Examples of the plant include an industrial plant such as a chemical plant or a biological plant, as well as a plant for managing and controlling a wellhead or its surrounding area of a gas field, an oil field or the like, a plant for managing and controlling power generation such as hydraulic power generation, thermal power generation and nuclear power generation, a plant for managing and controlling energy harvesting such as solar photovoltaic generation, wind power generation or the like, and a plant for managing and controlling water and sewerage, a dam or the like.

### [1.2. apparatus 4]

The apparatus 4 cooperates with a plurality of monitoring cameras 2 to assist in the security for the facility. The apparatus 4 includes a communication unit 40, a receiving unit 41, a storage unit 42, a determination unit 43, a notification unit 44, a warning unit 45, an image management unit 46, an estimation model 47, and a learning processing unit 48.

### [1. 2 (1). communication unit 40]

The communication unit 40 communicates with the administrator terminal 5 or the like via the communication network 10.

### [1. 2 (2). receiving unit 41]

The receiving unit 41 receives the image captured by the monitoring camera 2. It is noted that, although in the present embodiment, as one example, the receiving unit 41 directly receives the image from each monitoring camera 2, it may also receive the image via the communication unit 40 and the communication network 10. The receiving unit 41 may supply the received image to the storage unit 42 and the determination unit 43 together with the identification information (also referred to as camera ID) of the monitoring camera 2 that captured the image and/or the capturing time.

### [1. 2 (3). storage unit 42]

The storage unit 42 stores one or more images. For example, the storage unit 42 may store the reference image based on the past image captured by the monitoring camera 2 in the past.

The reference image may be an image used by the determination unit 43 to determine the presence or absence of the occurrence of an event that interferes with the monitoring performed by the monitoring camera 2 (also referred to as monitoring interference event). The monitoring interference event may be the event where at least a part of the field of view of the monitoring camera 2 is obstructed by a bag, a sheet, a sticky object (as one example, a gum), liquid (as one example, paint), bubble, a spider web, or the like, may be the event where the position or orientation of the monitoring camera 2 is changed, or may be the event where the power cable or communication cable of the monitoring camera 2 is cut. It is noted that the spider web may not affect the image captured by means of visible light but affect the image captured by means of infrared light since it causes diffuse reflection of infrared light.

The reference image may be an image showing a state with no monitoring interference events occurring. In addition, the reference image may be an image where only the non-moving subjects among the subjects that may be captured by the monitoring camera 2 are extracted. The storage unit 42 may store a reference image for each monitoring camera 2 that provides images to the apparatus 4.

The storage unit 42 may further store the image captured by each monitoring camera 2 and, in the present embodiment, as one example, it may store the image captured by each monitoring camera 2 in association with the camera ID of the monitoring camera 2 that performs the capturing. The image within the storage unit 42 may be readable by the communication unit 40.

### [1. 2 (4). determination unit 43]

The determination unit 43 determines, based on the image received by the receiving unit 41, the presence or absence of the occurrence of a monitoring interference event. The determination unit 43 may determine whether the monitoring interference event has occurred.

For example, the determination unit 43 may determine, based on the comparison result between the received image and the reference image, the presence or absence of the occurrence of the monitoring interference event. In the present embodiment, as one example, since the reference image indicates the state with no monitoring interference events occurring, the determination unit 43 may determine the presence of the occurrence of the monitoring interference event, based on the fact that the received image is different from the reference image.

The determination unit 43 may supply the determination result to a notification unit 44, a warning unit 45, an image management unit 46, and a learning processing unit 48. For example, in response to the determining the presence of the occurrence of the monitoring interference event (in the present embodiment, as one example, the determination that the monitoring interference event has occurred), the determination unit 43 may supply the determination result to the notification unit 44 or the like. In addition, in response to the determining the absence of the occurrence of the monitoring interference event (in the present embodiment, as one example, the determination that the monitoring interference event has not occurred), the determination unit 43 may supply the determination result to the notification unit 44 or the like.

The determination unit 43 may supply the determination result together with an image for which the determination was made, a camera ID of the monitoring camera 2 that captured the image, the capturing time, or the like. The camera ID of the monitoring camera 2 that captured the image for which the determination that the monitoring interference event has occurred was made may indicate the monitoring camera 2 where the monitoring interference event has occurred. The capturing time of the image for which the determination that the monitoring interference event has occurred was made may indicate the time of occurrence of the monitoring interference event.

### [1. 2 (5). notification unit 44]

The notification unit 44 notifies the administrator of the monitoring camera 2 that the monitoring interference event has occurred, in response to the determining the presence of the occurrence of the monitoring interference event (in the present embodiment, as one example, the determination that the monitoring interference event has occurred). The notification unit 44 may notify the administrator of the camera ID of the monitoring camera 2 where the monitoring interference event has occurred and the time of occurrence of the monitoring interference event. The notification unit 44 may perform the notification to the administrator terminal 5 via the communication unit 40.

### [1. 2 (6) warning unit 45]

The warning unit 45 performs warning via the monitoring camera 2 to a person or animal that causes the monitoring interference event to occur, in response to the determining the presence of the occurrence of the monitoring interference event (in the present embodiment, as one example, the determination that the monitoring interference event has occurred). The warning unit 45 may perform warning via the monitoring camera 2 where the monitoring interference event has occurred, among a plurality of monitoring cameras 2. As one example, the warning unit 45 may output a voice message or warning sound from the monitoring camera 2, or may produce a flash.

### [1. 2 (7) image management unit 46]

In response to the determining the presence of the occurrence of the monitoring interference event (in the present embodiment, as one example, the determination that the monitoring interference event has occurred) in one monitoring camera 2, the image management unit 46 associates an image captured by another monitoring camera 2 (also referred to as monitoring camera 2A) whose field of view includes the one monitoring camera 2 with the determination that the monitoring interference event has occurred.

The image management unit 46 may include a table (not shown in the figure) where the camera ID of at least one monitoring camera 2 (in the present embodiment, as one example, each monitoring camera 2 of the security system 1) is associated with the camera ID of another of each monitoring camera 2A whose field of view includes the monitoring camera 2. The image management unit 46 may refer to the table to detect another of each monitoring camera 2A whose field of view includes the monitoring camera 2 where the monitoring interference event has occurred.

The image management unit 46 may associate the image captured by another of each monitoring camera 2A among each image stored in the storage unit 42 with the determination that the monitoring interference event has occurred. The image management unit 46 may associate at least one image captured by another of each monitoring camera 2A during a time slot including the time of occurrence of the monitoring interference event with the determination that the monitoring interference event has occurred.

### [1. 2 (8) estimation model 47]

The estimation model 47 estimates from the image captured by the monitoring camera 2 the presence or absence of the occurrence of the monitoring interference event. In response to the input of the image captured by the monitoring camera 2, the estimation model 47 may perform the image analysis on the image and output the estimation result the presence or absence of the occurrence of the monitoring interference event.

For example the estimation model 47 may estimate the presence or absence of the occurrence of the monitoring interference event, depending on whether the detection target is detected through an image analysis. The detection target may be a subject to be detected (also referred to as target subject) among the subjects that may be included in the image. In response to the detection of the target subject, the estimation model 47 may further output the characteristic data indicating the characteristics of the target subject.

The target subject may be an object that may interfere with the monitoring performed by the monitoring camera 2, among the subjects that can be detected through the image analysis, and, for example, may be a spray can, a knife, or the like, or may be a bag whose mouth is open toward the monitoring camera 2, or a sticky side of adhesive tape.

The image that is the analysis target on which the estimation model 47 performs the image analysis may be a static image, and, as one example, may be the frame extracted from a moving image. It is noted that the detection target of the estimation model 47 may be the action (as one example, the action of shaking a spray can) performed across a plurality of frames. In this case, the image that is the analysis target on which the estimation model 47 performs the image analysis may be a moving image during a reference duration (as one example, 10 seconds or one minute). The estimation model 47 may perform the action analysis on the moving image for the reference duration and, in response to the detection of a particular action, output the estimation result indicating the presence of the occurrence of the monitoring interference event.

It is noted that although, in the present embodiment, as one example, the estimation model 47 may output the estimation result indicating whether the monitoring interference event has occurred, it may also output the estimation result indicating whether the monitoring interference event will occur. The estimation model 47 may be generated through learning processing. In the present embodiment, as one example, the estimation model 47 may be a model obtained through machine learning such as deep learning, but is not limited thereto.

### [1, 2 (9) learning processing unit 48]

The learning processing unit 48 performs learning processing on the estimation model 47 based on the image captured by the monitoring camera 2 in the case of the occurrence of the monitoring interference event being present. The learning processing unit 48 may perform the learning processing using the learning data including the image captured by the monitoring camera 2 where the monitoring interference event has occurred.

In the case where the estimation model 47 estimates whether the monitoring interference event has occurred, the learning data may include an image with the monitoring interference event having occurred. In the present embodiment, as one example, the learning data may include an image supplied together with the determination result indicating the presence of the occurrence of the monitoring interference event from the determination unit 43.

In the case where the estimation model 47 estimates whether the monitoring interference event will occur, the learning data may include an image immediately before the monitoring interference event occurs. In the present embodiment, as one example, if the determination result indicating the absence of the occurrence of the monitoring interference event is supplied from the determination unit 43 and then the determination result indicating the presence of the occurrence is supplied, the learning data may include an image supplied together with the determination result indicating the occurrence being absent.

### [1. 3. administrator terminal 5]

The administrator terminal 5 is a terminal that is operated by an administrator of the monitoring camera 2. The administrator terminal 5 may be able to communicate via the communication network 10. The administrator terminal 5 may be a handheld terminal (HHT), for example, a smartphone or a tablet PC, or may be a desktop PC.

The administrator terminal 5 may receive a notification for the occurrence of the monitoring interference event from the apparatus 4 and display the camera ID of the monitoring camera 2 where the monitoring interference event has occurred and the time of occurrence of the monitoring interference event. This allows the administrator to quickly go to the monitoring camera 2 where the monitoring interference event has occurred and resolve the monitoring interference event.

### [1. 4. effect achieved by apparatus 4]

According to the above-described apparatus 4, since the occurrence of the monitoring interference event is notified to the administrator of the monitoring camera 2 in response to the determining, based on the received image, the presence of the occurrence of the monitoring interference event (in the present embodiment, as one example, the determination that the monitoring interference event has occurred), the monitoring interference event can be quickly resolved to resume the monitoring performed by the monitoring camera 2.

In addition, the presence or absence of the occurrence of the monitoring interference event is determined based on the comparison result between the reference image corresponding to the image captured by the monitoring camera 2 in the past and the image received by the monitoring camera 2, the occurrence of the monitoring interference event can be accurately determined.

In addition, since learning processing is performed on the estimation model 47 based on the image captured in the case of the occurrence of the monitoring interference event being present, the estimation model 47 that may estimate the occurrence of the monitoring interference event can be generated to be used to determine the occurrence of the monitoring interference event.

In addition, since, in response to determining the presence of the occurrence of the monitoring interference event, the monitoring camera 2 warns the person or animal that caused the occurrence of the monitoring interference event, the monitoring interference event can be prevented from further worsened. In addition, since the person or animal that caused the occurrence of the monitoring interference event can be let to know that the occurrence of monitoring interference event causes the warning, the next occurrence of the monitoring interference event can be prevented.

In addition, since, in response to determining the presence of the occurrence of the monitoring interference event, the image captured by another monitoring camera 2 whose field of view includes the monitoring camera 2 is associated with the determination of the presence of the occurrence of the monitoring interference event, the factor that caused the monitoring interference event can be easily confirmed.

### [2. action]

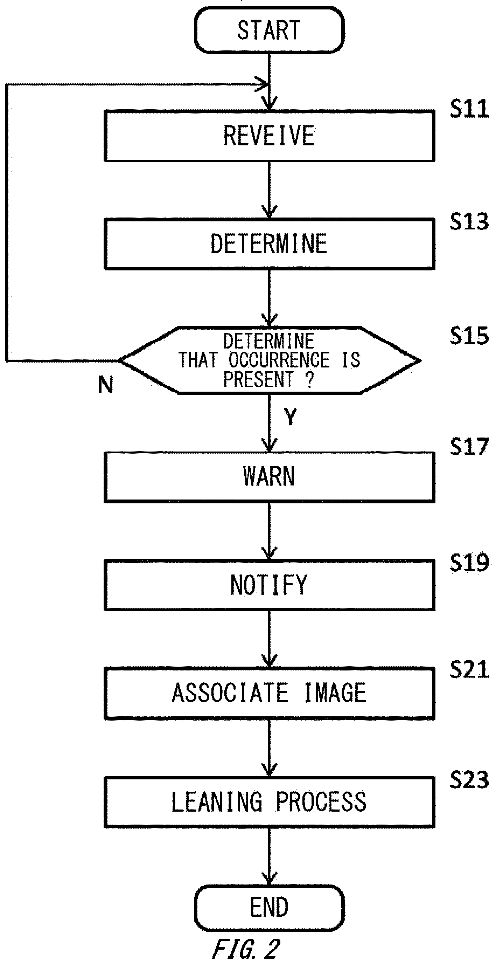

Fig. 2 shows an action of the apparatus 4. The apparatus 4 performs the process of steps S11 to S23 to support the monitoring performed by the monitoring camera 2.

In step S11, the receiving unit 41 receives the image captured by the monitoring camera 2. The receiving unit 41 may receive the camera ID of the monitoring camera 2 that captured the image together with the capturing time.

In step S13, the determination unit 43 determines the presence or absence of the occurrence of the monitoring interference event (in the present embodiment, as one example, whether the monitoring interference event has occurred) based on the received image. The determination unit 43 may determine the presence or absence of the occurrence of the monitoring interference event for each monitoring camera 2. The determination unit 43 may determine the presence or absence of the occurrence of the monitoring interference event based on the comparison result between the image received from the monitoring camera 2 and the reference image stored in the storage unit 42.

For example, the determination unit 43 may determine the presence of the occurrence of the monitoring interference event in response to the composition of the received image changing from the composition of the reference image by a threshold or more. The composition may be the arrangement of a subject within the image and may be the position and/or orientation of each subject fixed in the field of view (also referred to as fixed subject) among the subjects within the image, as one example. The fixed subject may be the boundary portion between, for example, a wall and a ceiling or a floor, a boundary portion between walls, a handrail, a lighting, a desk, a shelf, or the like. The orientation of the fixed subject may be the angle formed with the reference ling (as one example, the horizontal line) within the plane of the image, or may be the angle formed with the capturing plane, namely, the angle in the depth angle. The changing of the composition by a threshold or more may be at least one of the sum of the amount of shift in the position of each fixed subject exceeding a position shift threshold or the sum of the amount of shift in the angle of each fixed subject exceeding an angle shift threshold.

In addition, the determination unit 43 may determine the presence or absence of the occurrence of the monitoring interference event based on the focusing state of the monitoring camera 2. For example, the determination unit 43 may determine the presence of the occurrence of the monitoring interference event in response to the focusing state of the reference image being different from the focusing state of the image received by the monitoring camera 2. As one example, the determination unit 43 may determine the presence of the occurrence of the monitoring interference event in response to the sharpness of the region of the fixed subject included in the reference image being different from the sharpness of the region of the fixed subject included in the image received from the monitoring camera 2 by a reference value or more. Alternatively, without the comparison with the reference image, the determination unit 43 may determine the presence of the occurrence of the monitoring interference event in response to the sharpness of the image received from the monitoring camera 2 being lower by a lower limit value of sharpness or more.

In addition, the determination unit 43 may determine the presence or absence of the occurrence of the monitoring interference event based on the brightness of the image captured by the monitoring camera 2. The brightness of the image may be represented with any index. In the present embodiment, it may be luminance as one example, but it may also be lightness. The determination unit 43 may determine whether the monitoring interference event has occurred based on the brightness of at least a partial region of the image. As one example, the determination unit 43 may determine that the monitoring interference event has occurred in response to the brightness of at least a partial region of the image being different for a reference duration from the brightness of the corresponding region within the reference image by a reference amount or more. Alternatively, without the comparison with the reference image, the determination unit 43 may determine that the monitoring interference event has occurred in response to at least one of the brightness of at least a partial region of the image being, for a reference duration, higher than an upper limit value of brightness or lower than a lower limit value of brightness.

In addition, the determination unit 43 may determine the presence or absence of the occurrence of the monitoring interference event based on the image captured by the monitoring camera 2 through irradiation of infrared light (also referred to as IR image). The determination unit 43 may determine the presence of the occurrence of the monitoring interference event in response to the sensing of the diffuse reflection of infrared light. For example, the determination unit 43 may determine the presence or absence of the occurrence of the monitoring interference event based on the comparison result between the IR image received from the monitoring camera 2 and the reference image, and the reference image may be an image captured with visible light or may be an image captured through irradiation of infrared light. Alternatively, without the comparison with the reference image, the determination unit 43 may determine the presence or absence of the occurrence of the monitoring interference event based on at least one of the brightness or sharpness of the IR image. For example, the determination unit 43 may determine the presence of the occurrence of the monitoring interference event in response to the brightness of the IR image being higher than a reference brightness or the sharpness of the IR image being lower than a reference sharpness.

In addition, the determination unit 43 may determine the presence or absence of the occurrence of the monitoring interference event based on the shaking of the moving image captured by the monitoring camera 2. For example, the determination unit 43 may determine the presence of the occurrence of the monitoring interference event in response to the changing of the composition by a threshold or more by comparing each frame at the interval of a reference number in the moving image.

In addition, the determination unit 43 may determine the presence of the occurrence of the monitoring interference event in response to no image being received by the receiving unit 41. For example, the determination unit 43 may determine the presence of the occurrence of the monitoring interference event in response to no images being supplied from the receiving unit 41 or may determine the presence of the occurrence of the monitoring interference event in the case where the entire image supplied from the receiving unit 41 is all one color such as black, blue, white, or the like.

In step S15, the determination unit 43 determines whether it determined the presence of the occurrence of the monitoring interference event. If the absence of the occurrence of the monitoring interference event is determined (step S15: No), the process proceeds to step S11. If the presence of the occurrence of the monitoring interference event is determined (step S15: Yes), the process proceeds to step S17.

In step S17, the warning unit 45 warns the person or animal that caused the occurrence of the monitoring interference event via the monitoring camera 2. The warning unit 45 may continue warning for a reference time period (as one example, 10 seconds). It is noted that this process of step S17 through the process of step S23 described below may be performed in another order or may be performed in parallel.

In step S19, the notification unit 44 notifies the administrator terminal 5 of the occurrence of the monitoring interference event. This enables the administrator to resolve the monitoring interference event.

In step S21, the image management unit 46 associates the image captured by another monitoring camera 2A whose field of view includes the monitoring camera 2 where the monitoring interference event has occurred with the determination that the monitoring interference event has occurred. As one example, the image management unit 46 may attach the tag indicating that the monitoring interference event has occurred to the image captured by another of each monitoring camera 2A during a time slot including the time of occurrence of the monitoring interference event, among each image stored in the storage unit 42. The tag may include a camera ID of the monitoring camera 2 where the monitoring interference event has occurred.

In step S23, the learning processing unit 48 performs learning processing on the estimation model 47 based on the image captured by the monitoring camera 2 in the case of the occurrence of the monitoring interference event being present.

The learning processing unit 48 may perform learning processing on the estimation model 47 using the learning data including the image captured by the monitoring camera 2 where the monitoring interference event has occurred and the type of monitoring interference event that has occurred in the image (or the type of monitoring interference event that will occur in the image). This enables the estimation model 47 to estimate the presence or absence of the occurrence of various types of the monitoring interference event.

It is noted that the type of the monitoring interference event may be, as one example, at least a part of the field of view of the monitoring camera 2 being obstructed, the position or orientation of the monitoring camera 2 being changed, the cable of the monitoring camera 2 being cut, or the like. The type of the monitoring interference event may be input by an operator of the apparatus 4 or the like.

Furthermore, the learning processing unit 48 may perform learning processing on the estimation model 47 using the learning data including the capturing time of the monitoring camera 2, in addition to or instead of the type of the monitoring interference event. This enables the estimation model 47 to perform estimation corresponding to the capturing time in the case where the ways in which the monitoring interference event is captured are different depending on the capturing time.

It is noted that, in the case where a sufficient learning processing is performed on the estimation model 47 (as one example, the case where a reference number of learning processing is performed or the case where the estimation accuracy of the estimation model 47 becomes equal to or higher than a reference accuracy), the estimation model 47 may be used for the determination by the determination unit 43. In this case, in the process of step S13, the determination unit 43 may determine the presence of the occurrence of the monitoring interference event in response to the estimation model 47 estimating the occurrence of the monitoring interference event. In addition, this estimation model 47 may be stored in a distribution server, which is not shown in the figure, via the communication unit 40, supplied from the distribution server to another apparatus 4, and used for the determination by the determination unit 43.

According to the action described above, since the presence of the occurrence of the monitoring interference event is determined in response to the composition of the image received from the monitoring camera 2 being changed from the composition of a reference image by a threshold or more, the occurrence of the monitoring interference event can be accurately sensed.

In addition, since it is determined whether the monitoring interference event has occurred based on the focusing state of the monitoring camera 2, the monitoring interference event such as the monitoring camera 2 being moved or the monitoring camera 2 being covered with a bag or sprayed with liquid or bubble can be sensed.

In addition, since the presence or absence of the occurrence of the monitoring interference event is determined based on the brightness of the image, the monitoring interference event such as the monitoring camera 2 being covered with a bag or sprayed with liquid or bubble, or gum adhering thereto can be sensed. In addition, since the presence of the occurrence of the monitoring interference event is determined in the case where the entire image becomes all one color such black, blue, white, or the like due to the break of the cable, the break of the cable can also be sensed.

In addition, since the presence or absence of the occurrence of the monitoring interference event is determined based on the image captured through irradiation of infrared light, the monitoring interference event where the field of view of the monitoring camera 2 is obstructed by an object such as spider web affecting IR images can be sensed.

In addition, since the presence or absence of the occurrence of the monitoring interference event is determined based on the shaking of the captured moving image, the monitoring interference event such as the monitoring camera 2 being moved, a waste being attached to the monitoring camera 2, or the like can be sensed.

In addition, the presence of the occurrence of the monitoring interference event is determined in response to no images being received, the monitoring interference event such as the power cable of the monitoring camera 2 or the communication cable between the monitoring camera 2 and the apparatus being cut can be sensed.

### [3. Modification]

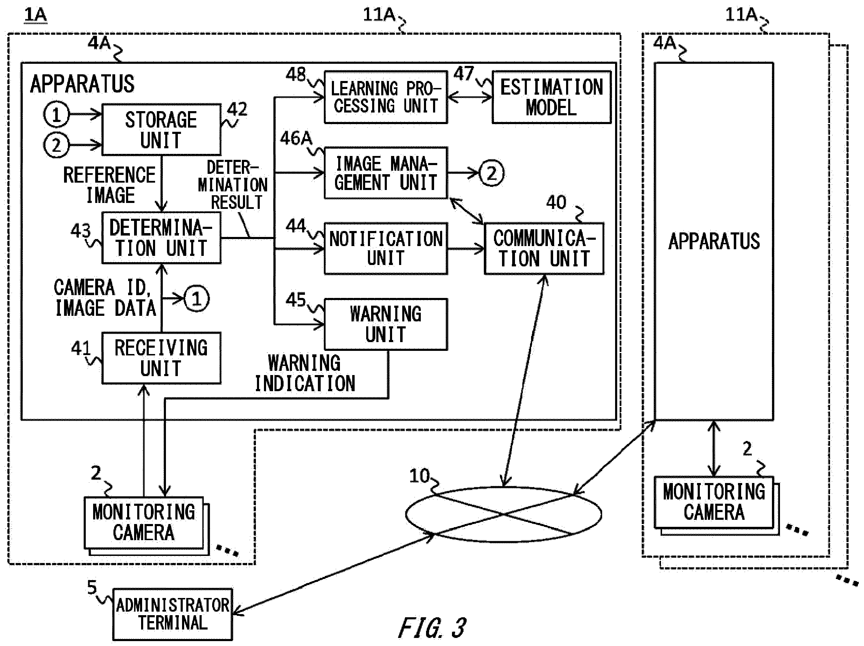

Fig. 3 shows a security system 1A according to a modification. It is noted that, the same reference numerals as those in the security system 1 shown in Fig. 1 are given to the same or substantially the same components in the security system 1A according to the present embodiment, and the description thereof will be omitted.

The security system 1A includes a plurality of monitoring systems 11A. Each monitoring system 11A includes an apparatus 4A, and one or more monitoring cameras 2 that supply an image to the apparatus 4A. Therefore, the security system 1A is equipped with a plurality of apparatuses 4A each associated with the one or more monitoring cameras 2. Each apparatus 4Amay be arranged in a disperse manner in a facility or the like. Among the plurality of monitoring systems 11A, a monitoring camera 2 in one monitoring system 11A may include, in its field of view, a monitoring camera 2 in another monitoring system 11A.

Each apparatus 4A has an image management unit 46A. The image management unit 46A cooperates with an image management unit 46A of another apparatus 4A and, in response to the determining the presence of the occurrence of the monitoring interference event in the first monitoring camera 2 (in the present embodiment, as one example, the determination that the monitoring interference event has occurred), associates an image captured by a second monitoring camera 2 with the determination that the monitoring interference event has occurred.

For example, in the case where the presence of the occurrence of the monitoring interference event has been determined in the first monitoring camera 2 with the first monitoring camera 2 in one monitoring system 11A being included in the field of view of the second monitoring camera 2 in another monitoring system 11A, the image management unit 46A of the apparatus 4A in one monitoring system 11A (also referred to as image management unit 46A (1)) and the image management unit 46A of another apparatus 4A in another monitoring system 11A (also referred to as image management unit 46A (2)) may cooperate with each other to manage the image.

The image management unit 46A (1) of one monitoring system 11A may have a table (not shown in the figure) in which the camera ID of at least one monitoring camera 2 in the one monitoring system 11A (in the present embodiment, as one example, each monitoring camera 2 of one monitoring system 11A) is associated with the camera ID of another of each monitoring camera 2 whose field of view includes the monitoring camera 2 and the identification information of the apparatus 4A to which an image is supplied from the another monitoring camera 2 (also referred to as apparatus ID). The image management unit 46A (1) may refer to this table to detect each second monitoring camera 2 whose field of view includes the first monitoring camera 2 where the monitoring interference event has occurred and the apparatus 4A to which the image is supplied by the second monitoring camera 2. The image management unit 46A (1) may supply to the detected apparatus 4A via the communication unit 40 the camera ID of the detected second monitoring camera 2, the camera ID of the first monitoring camera 2 where the monitoring interference event has occurred, and the time of occurrence.

On the other hand, the image management unit 46A (2) of another monitoring system 11A may, in response to the camera ID of the second monitoring camera 2 belonging to the another monitoring system 11A being supplied via the communication unit 40 together with the camera ID of the first monitoring camera 2 where the monitoring interference event has occurred and the time of occurrence, associate the image captured by the second monitoring camera 2, among each image stored in the storage unit 42, with the determination that the monitoring interference event has occurred in the first monitoring camera 2. The image management unit 46A (2) may associate at least one image captured by the second monitoring camera 2 during the time slot including the time of occurrence of the monitoring interference event with the determination that the monitoring interference event has occurred.

According to the apparatus 4A described above, through the cooperation with another apparatus 4A, in response to determining the presence of the occurrence of the monitoring interference event in the first monitoring camera 2, the image captured by the second monitoring camera 2 can be associated with the determination that the monitoring interference event has occurred.

### [4. other modifications]

It is noted that, although in the above-mentioned embodiment and modification the apparatus 4 is described to have the storage unit 42, the warning unit 45, the image management unit 46, 46A, the estimation model 47, and the learning processing unit 48, it may lack any of them. For example, in the case where the apparatus 4 lacks the storage unit 42, the determination unit 43 may determine the presence or absence of the occurrence of the monitoring interference event without the comparison with the reference image. In addition, where the apparatus 4 lacks the estimation model 47, the learning processing unit 48 may perform learning processing of the estimation model 47 externally connected to the apparatus 4, and the determination unit 43 may perform the determination by using the estimation model 47 which is externally connected to the apparatus 4 for learning processing.

In addition, although it has been described that the image management units 46, 46A associate the image captured by another monitoring camera 2A whose field of view includes the monitoring camera 2 where the monitoring interference event has occurred, among each image stored in the storage unit 42, with the determination that the monitoring interference event has occurred, the image management units 46, 46A may also read this image from the storage unit 42, associate it with the determination that the monitoring interference event has occurred, and upload it to the file server (not shown in the figure) accessible to another apparatus.

Furthermore, although the reference image stored in the storage unit 42 has been described to indicate the state with no monitoring reference events having occurred, it may also indicate the state with the monitoring interference event having occurred. In this case, the storage unit 42 may store a reference image for each type of the monitoring interference event. In addition, the determination unit 43 may determine that the monitoring interference event has occurred in response to the received image being similar to the reference image. As one example, the determination unit 43 may determine the presence of the occurrence of the monitoring interference event in response to the difference between the composition of the received image and the composition of the reference image being less than a threshold. In addition, the determination unit 43 may determine the presence of the occurrence of the monitoring interference event in response to the focusing state of the received image being similar to the focusing state of the reference image.

Furthermore, although the determination unit 43 has been described to determine whether the monitoring interference event has occurred, it may also determine whether the monitoring interference event will occur. In this case, the determination unit 43 may determine that the monitoring interference event will occur, in response to the reference image that indicates the state immediately before the monitoring interference event occur being similar to the image received from the monitoring camera 2. In addition, the determination unit 43 may perform the determination again after the warning performed by the warning unit 45, and, in response to the determination that no monitoring interference events will occur in the determination after the warning, the warning unit 45 ends the warning and the notification unit 44 may not perform the notification. Furthermore, the learning processing unit 48 may use the image for which it is determined that the monitoring interference event will occur to perform learning processing on the estimation model 47 that estimate whether the monitoring interference event will occur. Alternatively, the learning processing unit 48 may use the image captured at a time that is a reference time period (as one example, one minute) after the image for which it is determined that the monitoring interference event will occur (as one example, the frame extracted from a moving image) to perform the learning processing on the estimation model 47 that estimates whether the monitoring interference event has occurred.

Also, various embodiments of the present invention may be described with reference to flowcharts and block diagrams. Blocks may represent (1) steps of processes in which operations are performed or (2) sections of apparatuses responsible for performing operations. Certain steps and sections may be implemented by dedicated circuitry, programmable circuitry supplied with computer-readable instructions stored on computer-readable medium, and/or processors supplied with computer-readable instructions stored on computer-readable medium. The dedicated circuitry may include digital and/or analog hardware circuits, and may include integrated circuits (IC) and/or discrete circuits. Programmable circuitry may include reconfigurable hardware circuits including logical AND, OR, XOR, NAND, NOR, and other logical operations, flip-flops, registers, memory elements, etc., such as field-programmable gate arrays (FPGA), programmable logic arrays (PLA), and the like.

A computer-readable medium may include any tangible device that can store instructions to be executed by a suitable device, and as a result, the computer-readable medium having instructions stored thereon includes an article of manufacture including instructions which can be executed to create means for performing operations specified in the flowcharts or block diagrams. Examples of computer-readable medium may include an electronic storage medium, a magnetic storage medium, an optical storage medium, an electromagnetic storage medium, a semiconductor storage medium, etc. More specific examples of the computer-readable medium may include a Floppy (registered trademark) disk, a diskette, a hard disk, a random access memory (RAM), a read-only memory (ROM), an erasable programmable read-only memory (EPROM or Flash memory), an electrically erasable programmable read-only memory (EEPROM), a static random access memory (SRAM), a compact disc read-only memory (CD-ROM), a digital versatile disk (DVD), a BLU-RAY (registered trademark) disc, a memory stick, an integrated circuit card, and the like.

The computer-readable instruction may include an assembler instruction, an instruction-set-architecture (ISA) instruction, a machine instruction, a machine dependent instruction, a microcode, a firmware instruction, state-setting data, or either a source code or an object code written in any combination of one or more programming languages, including an object-oriented programming language such as Smalltalk (registered trademark), JAVA (registered trademark), C++, or the like, and a conventional procedural programming language such as a "C" programming language or a similar programming language.

Computer-readable instructions may be provided to a processor of a general purpose computer, special purpose computer, or other programmable data processing apparatus, or to a programmable circuitry, locally or via a local area network (LAN), wide area network (WAN) such as the Internet, or the like, to execute the computer-readable instructions to create means for performing operations specified in the flowcharts or block diagrams. Examples of the processor include a computer processor, a processing unit, a microprocessor, a digital signal processor, a controller, a microcontroller, and the like.

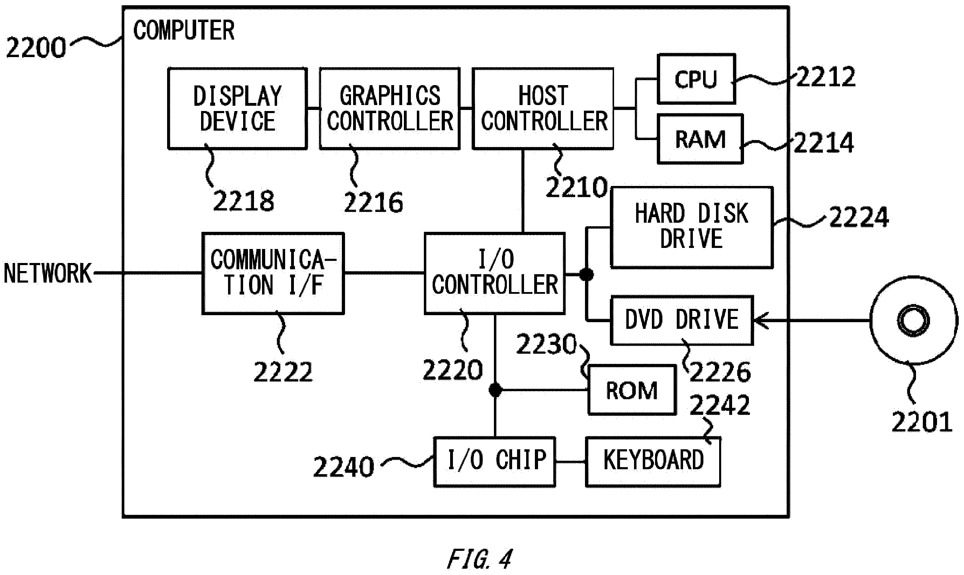

Fig. 4 illustrates an example of a computer 2200 in which a plurality of aspects of the present invention may be entirely or partially embodied. A program that is installed in the computer 2200 can cause the computer 2200 to function as operations associated with apparatuses according to the embodiments of the present invention or one or more sections of the apparatuses thereof, or can cause the computer 2200 to perform the operations or the one or more sections thereof, and/or can cause the computer 2200 to perform processes of the embodiments according to the present invention or steps of the processes thereof. Such a program may be executed by the CPU 2212 to cause the computer 2200 to perform certain operations associated with some or all of the blocks of flowcharts and block diagrams described herein.

The computer 2200 according to the present embodiment includes a CPU 2212, a RAM 2214, a graphics controller 2216, and a display device 2218, which are interconnected by a host controller 2210. The computer 2200 also includes input/output units such as a communication interface 2222, a hard disk drive 2224, a DVD-ROM drive 2226 and an IC card drive, which are connected to the host controller 2210 via an input/output controller 2220. The computer also includes legacy input/output units such as a ROM 2230 and a keyboard 2242, which are connected to the input/output controller 2220 via an input/output chip 2240.

The CPU 2212 operates according to programs stored in the ROM 2230 and the RAM 2214, thereby controlling each unit. The graphics controller 2216 obtains image data generated by the CPU 2212 on a frame buffer or the like provided in the RAM 2214 or in itself, and causes the image data to be displayed on the display device 2218.

The communication interface 2222 communicates with other electronic devices via a network. The hard disk drive 2224 stores programs and data used by the CPU 2212 within the computer 2200. The DVD-ROM drive 2226 reads the programs or the data from a DVD-ROM 2201, and provides the hard disk drive 2224 with the programs or the data via the RAM 2214. The IC card drive reads the program and data from an IC card, and/or writes the program and data to the IC card.

The ROM 2230 stores, in itself, a boot program or the like that is executed by the computer 2200 during activation, and/or a program that depends on hardware of the computer 2200. The input/output chip 2240 may also connect various input/output units to the input/output controller 2220 via a parallel port, a serial port, a keyboard port, a mouse port, and the like.

A program is provided by computer-readable medium such as the DVD-ROM 2201 or the IC card. The program is read from the computer-readable medium, installed in the hard disk drive 2224, the RAM 2214, or the ROM 2230, which is also an example of the computer-readable medium, and executed by the CPU 2212. The information processing written in these programs is read into the computer 2200, resulting in cooperation between a program and the above-mentioned various types of hardware resources. An apparatus or method may be constituted by realizing the operation or processing of information in accordance with the usage of the computer 2200.

For example, when communication is performed between the computer 2200 and an external device, the CPU 2212 may execute a communication program loaded onto the RAM 2214 to instruct communication processing to the communication interface 2222, based on the processing described in the communication program. The communication interface 2222, under control of the CPU 2212, reads transmission data stored on a transmission buffering region provided in a storage medium such as the RAM 2214, the hard disk drive 2224, the DVD-ROM 2201, or the IC card, and transmits the read transmission data to a network or writes reception data received from a network to a reception buffering region or the like provided on the storage medium.

In addition, the CPU 2212 may cause all or a necessary portion of a file or a database to be read into the RAM 2214, the file or the database having been stored in an external recording medium such as the hard disk drive 2224, the DVD-ROM drive 2226 (the DVD-ROM 2201), the IC card, etc., and perform various types of processing on the data on the RAM 2214. The CPU 2212 then writes back the processed data to the external recording medium.

Various types of information, such as various types of programs, data, tables, and databases, may be stored in the recording medium to undergo information processing. The CPU 2212 may execute various types of processing on the data read from the RAM 2214 to write back a result to the RAM 2214, the processing being described throughout the present disclosure, specified by instruction sequences of the programs, and including various types of operations, information processing, condition determinations, conditional branching, unconditional branching, information retrievals/replacements, or the like. In addition, the CPU 2212 may search for information in a file, a database, etc., in the recording medium. For example, when a plurality of entries, each having an attribute value of a first attribute associated with an attribute value of a second attribute, are stored in the recording medium, the CPU 2212 may search for an entry matching the condition whose attribute value of the first attribute is designated, from among the plurality of entries, and read the attribute value of the second attribute stored in the entry, thereby obtaining the attribute value of the second attribute associated with the first attribute satisfying the predetermined condition.

The above-described program or software modules may be stored in the computer-readable medium on the computer 2200 or near the computer 2200. In addition, a recording medium such as a hard disk or a RAM provided in a server system connected to a dedicated communication network or the Internet can be used as the computer-readable medium, thereby providing the program to the computer 2200 via the network.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or

diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

1 security system
2 monitoring camera
4 apparatus
5 administrator terminal
10 communication network
11 monitoring system
40 communication unit
41 receiving unit
42 storage unit
43 determination unit
44 notification unit
45 warning unit
46 image management unit
47 estimation model
48 learning processing unit
2200 computer
2201 DVD-ROM
2210 host controller
2212 CPU
2214 RAM
2216 graphics controller
2218 display device
2220 input/output controller
2222 communication interface
2224 hard disk drive
2226 DVD-ROM drive
2230 ROM
2240 input/output chip
2242 keyboard

## Claims

1. An apparatus (4) comprising:
a receiving unit (41) for receiving an image captured by a monitoring camera (2);
a determination unit (43) for determining, based on the image that was received, a presence or absence of an occurrence of an event that interferes with monitoring performed by the monitoring camera (2); and
a notification unit (44) for notifying an administrator of the monitoring camera (2) that the presence of the occurrence of the event has been determined, in response to the determination,
**characterized in that**
the apparatus (4) further comprises an image management unit (46) configured to associate an image captured by another monitoring camera (2A) whose field of view includes the monitoring camera (2) with the determination of the presence of the occurrence of the event, in response to the presence of the occurrence of the event is determined based on the image captured by the monitoring camera (2), to confirm the factor that caused the monitoring interference event.

2. The apparatus (4) according to claim 1, further comprising a storage unit (42) for storing a reference image based on a past image captured by the monitoring camera (2) in a past, wherein
the determination unit (43) is configured to determine the presence or absence of the occurrence of the event, based on a comparison result between the image that was received and the reference image.

3. The apparatus (4) according to claim 2, wherein the determination unit (43) is configured to determine the presence of the occurrence of the event, in response to a composition of the image that was received having changed from a composition of the reference image by a threshold or more.

4. The apparatus (4) according to claim 2 or 3, wherein the determination unit (43) is configured to determine, based on a focusing state of the monitoring camera (2), the presence or absence of the occurrence of the event.

5. The apparatus (4) according to any one of claims 1 to 4, wherein the determination unit (43) is configured to determine, based on brightness of an image captured by the monitoring camera (2), the presence or absence of the occurrence of the event.

6. The apparatus (4) according to any one of claims 1 to 5, wherein the determination unit (43) is configured to determine, based on an image captured by the monitoring camera (2) through irradiation of infrared light, the presence or absence of the occurrence of the event.

7. The apparatus (4) according to any one of claims 1 to 6, wherein the determination unit (43) is configured to determine, based on shaking of a moving image captured by the monitoring camera (2), a presence or absence of the occurrence of the event.

8. The apparatus (4) according to any one of claims 1 to 7, wherein the determination unit (43) is configured to determine the presence of the occurrence of the event, in response to no images being received by the receiving unit (41).

9. The apparatus (4) according to any one of claims 1 to 8, wherein the determination unit (43) is configured to determine whether the event has occurred.

10. The apparatus (4) according to any one of claims 1 to 8, wherein the determination unit (43) is configured to determine whether the event will occur.

11. The apparatus (4) according to any one of claims 1 to 10, further comprising a learning processing unit (48) configured to perform, based on an image captured by the monitoring camera (2) in a case of an occurrence of an event that interferes with monitoring being present, learning processing on an estimation model that estimates the presence or absence of an occurrence of the event from an image captured by the monitoring camera (2).

12. The apparatus (4) according to any one of claims 1 to 11, further comprising a warning unit (45) configured to warn, via the monitoring camera (2), a person or animal that caused the event to occur, in response to the determining the presence of the occurrence of the event.

13. A system (1) comprising:
an apparatus (4) according to any one of claims 1 to 12; and
one or more monitoring cameras (2) configured to supply a captured image to the apparatus (4).

14. The system (1) according to claim 13, comprising a plurality of the apparatuses (4A).

15. A method comprising:
receiving an image captured by a monitoring camera (2);
determining, based on the image that was received, a presence or absence of an occurrence of an event that interferes with monitoring performed by the monitoring camera (2); and
notifying an administrator of the monitoring camera (2) that a presence of an occurrence of the event has been determined, in response to the determination,
**characterized in that**
the method further comprises associating an image captured by another monitoring camera (2A) whose field of view includes the monitoring camera (2) with the determination of the presence of the occurrence of the event, in response to the presence of the occurrence of the event is determined based on the image captured by the monitoring camera (2), to confirm the factor that caused the monitoring interference event.

16. A recording medium comprising instructions that when executed by a computer causes a computer (2200) to serve as:
a receiving unit (41) configured to receive an image captured by a monitoring camera (2);
a determination unit (43) configured to, based on the image that was received, determine a presence or absence of an occurrence of an event that interferes with monitoring performed by the monitoring camera (2); and
a notification unit (44) configured to notify an administrator of the monitoring camera (2) that a presence of an occurrence of the event has been determined, in response to the determination,
**characterized in that** the program further causes the computer (2200) to serve as an image management unit (46) configured to associate an image captured by another monitoring camera (2A) whose field of view includes the monitoring camera (2) with the determination of the presence of the occurrence of the event, in response to the presence of the occurrence of the event is determined based on the image captured by the monitoring camera (2), to confirm the factor that caused the monitoring interference event.

## Patentansprüche

1. Vorrichtung (4), die umfasst:
eine Empfangs-Einheit (41) zum Empfangen eines von einer Überwachungskamera (2) aufgenommenen Bildes;
eine Feststellungs-Einheit (43) zum Feststellen eines Vorhandenseins oder Nichtvorhandenseins eines Eintretens eines Ereignisses, das von der Überwachungskamera (2) durchgeführtes Überwachen stört, auf Basis des Bildes, das empfangen wurde; und
eine Benachrichtigungs-Einheit (44) zum Benachrichtigen eines Administrators der Überwachungskamera (2) dahingehend, dass das Vorhandensein des Eintretens des Ereignisses festgestellt worden ist, in Reaktion auf die Feststellung,
**dadurch gekennzeichnet, dass**
die Vorrichtung (4) des Weiteren eine Bildverwaltungs-Einheit (46) umfasst, die so ausgeführt ist, dass sie in Reaktion darauf, dass das Vorhandensein des Eintretens des Ereignisses auf Basis des von der Überwachungskamera (2) aufgenommenen Bildes festgestellt wird, ein Bild, das von einer anderen Überwachungskamera (2A) aufgenommen wurde, deren Sichtfeld die Überwachungskamera (2) einschließt, mit der Feststellung des Vorhandenseins des Eintretens des Ereignisses verknüpft und den Faktor bestätigt, der das Überwachen störende Ereignis verursacht hat.

2. Vorrichtung (4) nach Anspruch 1, die des Weiteren eine Speicher-Einheit (42) zum Speichern eines Bezugsbildes umfasst, das auf einem vergangenen Bild basiert, das von der Überwachungskamera (2) in einer Vergangenheit aufgenommen wurde, wobei
die Feststellungs-Einheit (43) so ausgeführt ist, dass sie das Vorhandensein oder Nichtvorhandensein des Eintretens des Ereignisses auf Basis eines Ergebnisses von Vergleich des Bildes, das empfangen wurde, mit dem Bezugsbild feststellt.

3. Vorrichtung (4) nach Anspruch 2, wobei die Feststellungs-Einheit (43) so ausgeführt ist, dass sie das Vorhandensein des Eintretens des Ereignisses in Reaktion darauf feststellt, dass sich eine Zusammensetzung des Bildes, dass empfangen wurde, gegenüber einer Zusammensetzung des Bezugsbildes um einen Schwellenwert oder stärker verändert hat.

4. Vorrichtung (4) nach Anspruch 2 oder 3, wobei die Feststellungs-Einheit (43) so ausgeführt ist, dass sie auf Basis eines Fokussier-Zustandes der Überwachungskamera (2) das Vorhandensein oder Nichtvorhandensein des Eintretens des Ereignisses feststellt.

5. Vorrichtung (4) nach einem der Ansprüche 1 bis 4, wobei die Feststellungs-Einheit (43) so ausgeführt ist, dass sie auf Basis von Helligkeit eines von der Überwachungskamera (2) aufgenommenen Bildes das Vorhandensein oder Nichtvorhandensein des Eintretens des Ereignisses feststellt.

6. Vorrichtung (4) nach einem der Ansprüche 1 bis 5, wobei die Feststellungs-Einheit (43) so ausgeführt ist, dass sie auf Basis eines von der Überwachungskamera (2) mittels Bestrahlung mit Infrarotlicht aufgenommenen Bildes das Vorhandensein oder Nichtvorhandensein des Eintretens des Ereignisses feststellt.

7. Vorrichtung (4) nach einem der Ansprüche 1 bis 6, wobei die Feststellungs-Einheit (43) so ausgeführt ist, dass sie auf Basis von Verwackeln eines von der Überwachungskamera (2) aufgenommenen Bewegtbildes ein Vorhandensein oder Nichtvorhandensein des Eintretens des Ereignisses feststellt.

8. Vorrichtung (4) nach einem der Ansprüche 1 bis 7, wobei die Feststellungs-Einheit (43) so ausgeführt ist, dass sie das Vorhandensein des Eintretens des Ereignisses in Reaktion darauf feststellt, dass durch die Empfangs-Einheit (41) keine Bilder empfangen werden.

9. Vorrichtung (4) nach einem der Ansprüche 1 bis 8, wobei die Feststellungs-Einheit (43) so ausgeführt ist, dass sie feststellt, ob das Ereignis eingetreten ist.

10. Vorrichtung (4) nach einem der Ansprüche 1 bis 8, wobei die Feststellungs-Einheit (43) so ausgeführt ist, dass sie feststellt, ob das Ereignis eintreten wird.

11. Vorrichtung (4) nach einem der Ansprüche 1 bis 10, die des Weiteren eine Einheit (48) für lernende Verarbeitung umfasst, die so ausgeführt ist, dass sie auf Basis eines von der Überwachungskamera (2) aufgenommenen Bildes im Falle des Vorhandenseins eines Eintretens eines Ereignisses, das Überwachung stört, lernende Verarbeitung an einem Schätz-Modell durchführt, das das Vorhandensein oder Nichtvorhandensein eines Eintretens des Ereignisses anhand eines von der Überwachungskamera (2) aufgenommenen Bildes schätzt.

12. Vorrichtung (4) nach einem der Ansprüche 1 bis 11, die des Weiteren eine Warn-Einheit (45) umfasst, die so ausgeführt ist, dass sie in Reaktion darauf, dass das Vorhandensein des Eintretens des Ereignisses festgestellt wird, über die Überwachungskamera (2) eine Person oder ein Tier warnt, die/das das Eintreten des Ereignisses verursacht hat.

13. System (1), das umfasst:
eine Vorrichtung (4) nach einem der Ansprüche 1 bis 12; sowie
eine oder mehrere Überwachungskamera/s (2), die so ausgeführt ist/sind, dass sie der Vorrichtung (4) ein aufgenommenes Bild zuführt/zuführen.

14. System (1) nach Anspruch 13, das eine Vielzahl der Vorrichtungen (4A) umfasst.

15. Verfahren, das umfasst:
Empfangen eines von einer Überwachungskamera (2) aufgenommenen Bildes;
Feststellen eines Vorhandenseins oder Nichtvorhandenseins eines Eintretens eines Ereignisses, das von der Überwachungskamera (2) durchgeführte Überwachung stört, auf Basis des Bildes, das empfangen wurde; und
Benachrichtigen eines Administrators der Überwachungskamera (2) dahingehend, dass ein Vorhandensein eines Eintretens des Ereignisses festgestellt worden ist, in Reaktion auf die Feststellung,
**dadurch gekennzeichnet, dass**
das Verfahren des Weiteren Verknüpfen eines Bildes, das von einer anderen Überwachungskamera (2A) aufgenommen wird, deren Sichtfeld die Überwachungskamera (2) einschließt, mit der Feststellung des Vorhandenseins des Eintretens des Ereignisses in Reaktion auf das Vorhandensein des Eintretens des Ereignisses auf Basis des von der Überwachungskamera (2) aufgenommenen Bildes sowie Bestätigen des Faktors umfasst, der das Überwachen störende Ereignis verursacht hat.

16. Aufzeichnungsmedium, das Anweisungen umfasst, die, wenn sie von einem Computer ausgeführt werden, einen Computer (2200) veranlassen, zu dienen als:
eine Empfangs-Einheit (41), die zum Empfangen eines von einer Überwachungskamera (2) aufgenommenen Bildes ausgeführt ist;
eine Feststellungs-Einheit (43), die so ausgeführt ist, dass sie ein Vorhandensein oder Nichtvorhandensein eines Eintretens eines Ereignisses, das von der Überwachungskamera (2) durchgeführtes Überwachen stört, auf Basis des Bildes feststellt, das empfangen wurde; und
eine Benachrichtigungs-Einheit (44), die so ausgeführt ist, dass sie in Reaktion auf die Feststellung einen Administrator der Überwachungskamera (2) dahingehend benachrichtigt, dass ein Vorhandensein eines Eintretens des Ereignisses festgestellt worden ist,
**dadurch gekennzeichnet, dass** das Programm des Weiteren den Computer (2200) veranlasst, als eine Bildverwaltungs-Einheit (46) zu dienen, die so ausgeführt ist, dass sie in Reaktion darauf, dass das Vorhandensein des Eintretens des Ereignisses auf Basis des von der Überwachungskamera (2) aufgenommenen Bildes festgestellt wird, ein Bild, das von einer anderen Überwachungskamera (2A) aufgenommen wird, deren Sichtfeld die Überwachungskamera (2) einschließt, mit der Feststellung des Vorhandenseins des Eintretens des Ereignisses verknüpft und den Faktor bestätigt, der das Überwachen störende Ereignis verursacht hat.

## Revendications

1. Appareil (4) comprenant :
une unité de réception (41) pour recevoir une image capturée par une caméra de surveillance (2) ;
une unité de détermination (43) pour déterminer, sur la base de l'image qui a été reçue, une présence ou une absence de l'occurrence d'un événement qui interfère avec la surveillance mise en oeuvre par la caméra de surveillance (2) ; et
une unité de notification (44) pour notifier un administrateur de la caméra de surveillance (2) que la présence de l'occurrence de l'évènement a été déterminée, en réponse à la détermination,
**caractérisé en ce que** l'appareil (4) comprend en outre une unité de gestion d'image (46) configurée pour associer une image capturée par une autre caméra de surveillance (2A) dont le champ de vision comprend la caméra de surveillance (2) avec la détermination de la présence de l'occurrence de l'évènement, en réponse à la détermination de la présence de l'occurrence de l'évènement sur la base de l'image capturée par la caméra de surveillance (2), pour confirmer le facteur qui a causé l'évènement d'interférence de surveillance.

2. Appareil (4) selon la revendication 1, comprenant en outre une unité de stockage (42) pour stocker une image de référence sur la base d'une image passée capturée par la caméra de surveillance (2) dans le passé, dans lequel
l'unité de détermination (43) est configurée pour déterminer la présence ou l'absence de l'occurrence de l'évènement, sur la base d'un résultat de comparaison entre l'image qui a été reçue et l'image de référence.

3. Appareil (4) selon la revendication 2, dans lequel l'unité de détermination (43) est configurée pour déterminer la présence de l'occurrence de l'évènement, en réponse au changement supérieur ou égal à une valeur seuil d'une composition de l'image qui a été reçue par rapport à une composition de l'image de référence.

4. Appareil (4) selon la revendication 2 ou 3, dans lequel l'unité de détermination (43) est configurée pour déterminer, sur la base d'un état de focalisation de la caméra de surveillance (2), la présence ou l'absence de l'occurrence de l'évènement.

5. Appareil (4) selon l'une quelconque des revendications 1 à 4, dans lequel l'unité de détermination (43) est configurée pour déterminer, sur la base de la luminosité d'une image capturée par la caméra de surveillance (2), la présence ou l'absence de l'occurrence de l'évènement.

6. Appareil (4) selon l'une quelconque des revendications 1 à 5, dans lequel l'unité de détermination (43) est configurée pour déterminer, sur la base d'une image capturée par la caméra de surveillance (2) via l'irradiation de lumière infrarouge, la présence ou l'absence de l'occurrence de l'évènement.

7. Appareil (4) selon l'une quelconque des revendications 1 à 6, dans lequel l'unité de détermination (43) est configurée pour déterminer, sur la base d'une secousse d'une image mobile capturée par la caméra de surveillance (2), d'une présence ou d'une absence de l'occurrence de l'évènement.

8. Appareil (4) selon l'une quelconque des revendications 1 à 7, dans lequel l'unité de détermination (43) est configurée pour déterminer la présence de l'occurrence de l'évènement, en réponse au fait qu'aucune image n'a été reçue par l'unité de réception (41).

9. Appareil (4) selon l'une quelconque des revendications 1 à 8, dans lequel l'unité de détermination (43) est configurée pour déterminer si l'évènement s'est produit ou non.

10. Appareil (4) selon l'une quelconque des revendications 1 à 8, dans lequel l'unité de détermination (43) est configurée pour déterminer si l'évènement se produira ou non.

11. Appareil (4) selon l'une quelconque des revendications 1 à 10, comprenant en outre une unité de traitement d'apprentissage (48) configurée pour mettre en oeuvre, sur la base d'une image capturée par la caméra de surveillance (2) dans le cas de l'occurrence d'un événement qui interfère avec la présence d'une surveillance, le traitement de l'apprentissage d'un modèle d'estimation qui estime la présence ou l'absence de l'occurrence de l'évènement à partir d'une image capturée par la caméra de surveillance (2).

12. Appareil (4) selon l'une quelconque des revendications 1 à 11, comprenant en outre une unité d'avertissement (45) configurée pour avertir, via la caméra de surveillance (2), une personne ou un animal qui a provoqué l'évènement, en réponse à la détermination de la présence de l'occurrence de l'évènement.

13. Système (1) comprenant :
un appareil (4) selon l'une quelconque des revendications 1 à 12 ; et
une ou plusieurs caméras de surveillance (2) configurées pour alimenter une image capturée à l'appareil (4) .

14. Système (1) selon la revendication 13, comprenant une pluralité d'appareils (4A).

15. Procédé comprenant :
la réception d'une image capturée par une caméra de surveillance (2) ;
la détermination, sur la base de l'image qui a été reçue, d'une présence ou d'une absence de l'occurrence d'un événement qui interfère avec la surveillance mise en oeuvre par la caméra de surveillance (2) ; et
la notification d'un administrateur de la caméra de surveillance (2) qu'une présence de l'occurrence de l'évènement a été déterminée, en réponse à la détermination,
**caractérisé en ce que** le procédé comprend en outre l'association d'une image capturée par une autre caméra de surveillance (2A) dont le champ de vision comprend la caméra de surveillance (2) avec la détermination de la présence de l'occurrence de l'évènement, en réponse à la détermination de la présence de l'occurrence de l'évènement sur la base de l'image capturée par la caméra de surveillance (2), pour confirmer le facteur qui a causé l'évènement d'interférence de surveillance.

16. Support d'enregistrement comprenant des instructions qui, lorsqu'elles sont exécutées par un ordinateur, commandent à l'ordinateur (2200) de fonctionner comme :
une unité de réception (41) configurée pour recevoir une image capturée par une caméra de surveillance (2) ;
une unité de détermination (43) configurée, sur la base de l'image qui a été reçue, pour déterminer une présence ou une absence de l'occurrence d'un événement qui interfère avec la surveillance mise en oeuvre par la caméra de surveillance (2) ; et
une unité de notification (44) configurée pour notifier un administrateur de la caméra de surveillance (2) qu'une présence de l'occurrence de l'évènement a été déterminée, en réponse à la détermination,
**caractérisé en ce que** le programme commande en outre à l'ordinateur (2200) de fonctionner comme une unité de gestion d'image (46) configurée pour associer une image capturée par une autre caméra de surveillance (2A) dont le champ de vision comprend la caméra de surveillance (2) avec la détermination de la présence de l'occurrence de l'évènement, en réponse à la détermination de la présence de l'occurrence de l'évènement sur la base de l'image capturée par la caméra de surveillance (2), pour confirmer le facteur qui a causé l'évènement d'interférence de surveillance.
